# EUROPEAN PATENT APPLICATION

(11) **EP 2 813 930 A1**
(43) Date of publication of application: **17.12.2014**
(21) Application number: 13757339.0
(22) Date of filing: 06.03.2013
(51) Int. Cl.: G06F 3/048

(54) **TERMINAL RESELECTION OPERATION METHOD AND TERMINAL**

(30) Priority: 06.03.2012 CN 201210056739
(71) Applicant: Huawei Device Co., Ltd., Shenzhen, Guangdong 518129 (CN)
(72) Inventor: WU, Zhijian, Guangdong 518129 (CN); SONG, Yuxuan, Guangdong 518129 (CN)
(74) Representative: Pfenning, Meinig & Partner GbR
(86) International application number: PCT/CN2013/072209
(87) International publication number: WO 2013/131473

(57) **Abstract**

The present invention discloses a touchscreen operation method and a terminal, which relate to the field of terminals and can implement a batch operation on multiple entries of displayed entries and increase an operation speed of a user. An embodiment of the present invention discloses a terminal multiselection operation method, including: receiving, when content currently displayed by a touchscreen is displayed entries, a first operation of a user, where the displayed entries correspond to data items stored in a terminal; activating, when the first operation is a first preset operation for activating a selection mode, the selection mode of the touchscreen; and receiving a second operation of the user and carrying out a second preset operation on all entries along a track of the second operation.

## Description

This application claims priority to Chinese Patent Application No. CN 201210056739.5, filed with the Chinese Patent Office on March 6, 2012, and entitled "TERMINAL MULTISELECTION OPERATION METHOD AND TERMINAL", which is incorporated herein by reference in its entirety.

### TECHNICAL FIELD

The present invention relates to a field of terminals, and in particular, to a terminal multiselection operation method and a terminal.

### BACKGROUND

At present, a touchscreen is widely applied to terminal products such as a mobile phone and a tablet. There are usually two methods when a user needs to perform an operation on multiple displayed entries on a display interface of a terminal device. One method is to select multiple displayed entries one by one by using a touchscreen until all required entries are selected; and the other method is to directly select all entries when the device provides an all-select operation. For example, when a short message needs to be group-sent to contacts in a mobile phone, the contacts need to be selected one by one until one group of contacts required by the user is selected, or all contacts are directly selected.

In a process of implementing the foregoing technical solution, the inventor finds that at least the following problem exists in the prior art: That a user selects displayed entries one by one is time-consuming and is adverse to improving an operation speed and operation experience of a user; and when the user does not need to select all contacts, the operation manner of directly selecting all contacts is not applicable at all.

### SUMMARY

Embodiments of the present invention provide a touchscreen operation method and a terminal, which can implement a free selection of and a batch operation on several entries of displayed entries, thereby increasing an operation speed of a user.

To achieve the foregoing purpose, the embodiments of the present invention adopt the following technical solution:

A touchscreen operation method, including:
receiving, when content currently displayed by the touchscreen is displayed entries, a first operation of a user, where the displayed entries correspond to data items stored in the terminal; activating, when the first operation is a first preset operation, a selection mode of the touchscreen; and receiving a second operation of the user and carrying out a second preset operation on all entries along a track of the second operation.A terminal, including:
   a first operation receiving unit, configured to, when content currently displayed by the touchscreen is displayed entries, receive a first operation of a user, where the displayed entries correspond to data items stored in a terminal; a selection mode activating unit, configured to, when the first operation is a first preset operation, activate a selection mode of the touchscreen; and a second operation receiving unit, configured to receive a second operation of the user and, when a track of the second operation is a sliding track, carry out a second preset operation on all entries along the track of the second operation.In the terminal multiselection operation method and the terminal provided by the embodiments of the present invention, a selection mode of a touchscreen is activated according to an operation of a user, and under the selection mode, the user carries out a preset operation in batch on entries that need to be selected, thereby avoiding a one-by-one operation by the user on the displayed entries, implementing a free selection of and a batch operation on several entries of the displayed items, and reducing the operation time consumption of the user.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a touchscreen operation method according to an embodiment 1 of the present invention;
FIG. 2 is a schematic diagram of a terminal display interface according to the embodiment 1 of the present invention;
FIG. 3 is a schematic diagram of a display interface after a multiselection operation on a basis of FIG. 2;
FIG. 4 is a flowchart of a touchscreen operation method according to an embodiment 2 of the present invention;
FIG. 5 is a block diagram of a terminal according to an embodiment 3 of the present invention;
FIG. 6 is a block diagram of another terminal according to the embodiment 3 of the present invention;
FIG. 7 is a flowchart of an operation method applied to the somatosensory field according to an embodiment of the present invention; and
FIG. 8 is a block diagram of a terminal applied to the somatosensory field according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

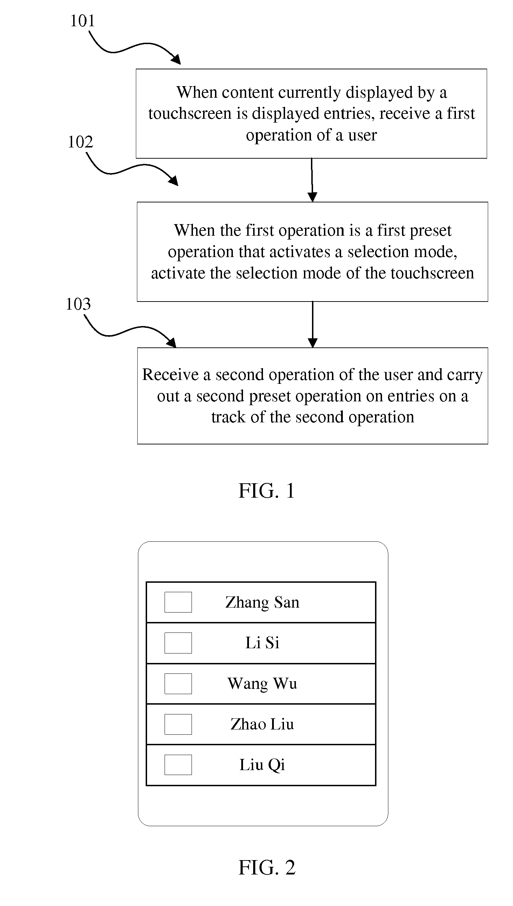

This embodiment of the present invention provides a terminal multiselection operation method, which, as shown in FIG. 1, includes the following steps:
101: When content currently displayed by a touchscreen of the terminal is displayed entries, receive a first operation of a user. The displayed entries are data information displayed on a current interface, and correspond to data items stored in a terminal; and the touchscreen refers to a screen on which an operation may be performed by using a finger, a touch pen or the like as a touch body. It should be noted that an operation by using a somatosensory gesture also falls within the scope defined by the embodiment of the present invention, which is not described in detail herein for convenience of description and will be described in detail in the following.
102: When the first operation is a first preset operation for activating a selection mode, activate the selection mode of the touchscreen, where the selection mode means that, in this mode, after the terminal receives an operation of a user on the touchscreen, the terminal performs a batch operation on displayed entries along a track of the operation without sliding content currently displayed by the touchscreen.

The first preset operation, that is, an operation for activating the selection mode, may be selected by using a function menu or activated by using a specific key, where the key may be a virtual key or a physical key. In a case of using a function menu, the touchscreen may be long-touched under a certain operation interface to activate the selection mode, or the function menu is opened by using a menu key to enter the selection mode. The embodiment of the present invention does not set any limitation thereon. In addition, when the selection mode is activated, the user may be prompted that the selection mode has been activated by using such manners as changing a font or a display ground color, or using a floating font.
103: Receive a second operation of the user and carry out a second preset operation on all entries along a track of the second operation.

Optionally, the second operation may be a tap-selection operation or a sliding operation; and for a sliding operation, a sliding track may be continuous or discontinuous, and may be a track of any shape. The second preset operation is a selection operation or a deselection operation carried out on the entries.

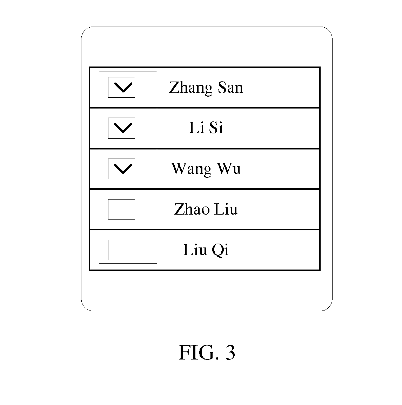

For example, as shown in FIG. 2, entries currently displayed by the touchscreen are a contact list, and in this case, the user may trigger the selection mode by using a specific operation, where the specific operation may be selection by using a function menu or by using a specific key, where the key may be a virtual key or a physical key. After entering the selection mode, the user may select multiple entries of the currently-displayed contact list by sliding on the touchscreen or tapping the touchscreen, or the like, and according to the operation of the user, the terminal carries out a preset operation, that is, a selection or deselection operation, on all contacts along a track of the operation. When the preset operation is a selection operation, a display effect is as shown in FIG. 3. It should be noted that a selection box is not necessary in the contact list, and the terminal may as well prompt the user which information has been selected by using other manners. FIG. 2 and FIG. 3 both illustrate an exemplary implementation manner of the embodiment of the present invention.

According to the terminal multiselection operation method provided by the embodiment of the present invention, a selection mode of a touchscreen is activated according to an operation of a user, and under the selection mode, the user carries out a preset operation in batch on entries that need to be selected, thereby avoiding a one-by-one operation by the user on the displayed entries, implementing a free selection of and a batch operation on multiple entries of the displayed entries, and reducing operation time consumption of the user.

### Embodiment 2

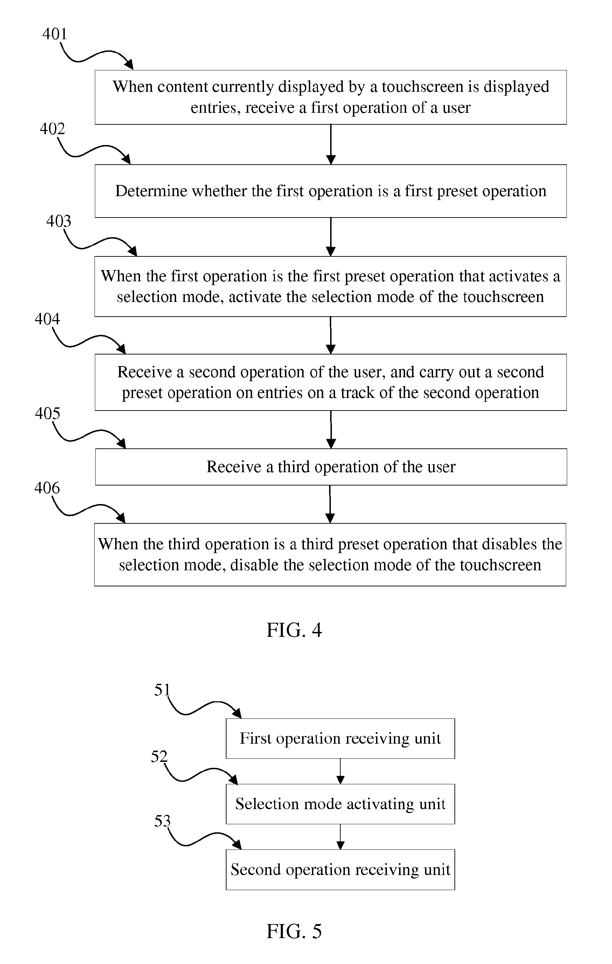

This embodiment of the present invention provides a touchscreen operation method, which, as shown in FIG. 4, includes the following steps:
401: When content currently displayed by the touchscreen is displayed entries, receive a first operation of a user. The displayed entries are data information displayed on a current interface and correspond to data items stored in the terminal. As shown in FIG. 2, the displayed entries are information displayed in a terminal contact list, where each piece of information corresponds to one data item stored in a terminal.
402: Determine whether the first operation is a first preset operation, where the first preset operation is a preset operation used to activate a selection mode. The selection mode means that, in this mode, after the terminal receives an operation of a user on the touchscreen, the terminal performs a batch operation on displayed entries along a track of the operation without sliding content currently displayed by the touchscreen.

The first preset operation, that is, an operation for activating the selection mode, may be selected by using a function menu or activated by using a specific key, where the key may be a virtual key or a physical key. In a case of using a function menu, the touchscreen may be long-touched under a certain operation interface to activate the selection mode, or the function menu is opened by using a menu key to enter the selection mode. The embodiment of the present invention does not set any limitation thereon. In addition, when the selection mode is activated, the user may be prompted that the selection mode has been activated by using such manners as changing a font or a display ground color or using a floating font.

403: When the first operation is the first preset operation for activating the selection mode, activate the selection mode of the touchscreen.

404: Receive a second operation of the user and carry out a second preset operation on entries along a track of the second operation. Optionally, the second operation may be a tap-selection operation or a sliding operation; and for a sliding operation, the sliding track may be continuous or discontinuous, and may be a track of any shape. The second preset operation is a selection operation or a deselection operation carried out on the entries.

In addition, optionally, when multiple entries along the track of the second operation include both selected entries and unselected entries, the second preset operation may also be any one operation of a selection operation or a deselection operation uniformly executed on the multiple entries along the track of the second operation. For example, the second preset operation may be manually set so that, when multiple records along the track of the second operation include both selected entries and unselected entries, a quantity is not detected while the entries along the track of the second operation are uniformly subjected to a selection operation.

Alternatively, when multiple entries along the track of the second operation include both selected entries and unselected entries, the second preset operation may also be different second preset operations executed correspondingly according to a difference between the quantity of the selected entries and the quantity of the unselected entries. Specifically, it may include the following steps S1 to S3:
S1: When multiple entries along the track of the second operation include both selected entries and unselected entries, detect a quantity of selected entries and a quantity of unselected entries in the multiple entries along the track of the second operation;
S2: When the quantity of selected entries in the multiple entries along the track of the second operation is not less than the quantity of unselected entries, execute a deselection operation on the multiple entries along the track of the second operation;
   or
S3: When the quantity of selected entries in the multiple entries along the track of the second operation is less than the quantity of unselected entries, execute a selection operation on the multiple entries along the track of the second operation.

In addition, optionally, in a process of executing the steps of the embodiment of the present invention, at least one of the following actions may be executed:
when the track of the second operation of the user reaches an upper/lower edge of a current operation region, swipe the content currently displayed by the touchscreen up/down; and when the track of the second operation of the user reaches a left/right edge of a current operation region, swipe the content currently displayed by the touchscreen left/right.

In a practical scenario, because of different models of terminals, their screen display may be in a left-right direction, or may also be in an up-down direction. With respect to different cases, when the track of the touch operation reaches an edge of an operation region, a page swiping operation needs to be carried out, and previously selected content or deselected content needs to be stored.

That the track of the second operation of the user reaches the upper/lower edge or left/right edge of the selected region may be implemented by using a method of periodically detecting a position of the track, and may also be implemented by sending a signal to a processor when an edge of the screen senses a second touch operation. The embodiment of the present invention does not set any limitation thereon.

In addition, optionally, a page swiping operation under the selection mode may also be implemented by using such manners as tapping the touchscreen for a preset number of times, or using a function menu, or triggering a sensor through shaking or overturning the terminal, or the like, and the embodiment of the present invention does not set any limitation thereon.
405: Receive a third operation of the user.
406: When the third operation is a third preset operation for disabling the selection mode, disable the selection mode of the touchscreen.

The third preset operation is preset and used to disable the selection mode. The third preset operation may be selected by using a function menu or activated by using a specific key, where the key may be a virtual key or a physical key. In a case of using a function menu, the touchscreen may be long-touched to disable the selection mode under a certain operation interface, or the function menu is opened by using a menu key to disable the selection mode. The embodiment of the present invention does not set any limitation thereon.

Optionally, the third preset operation may also be used to directly trigger an application when the selection mode is disabled. For example, after the user selects contacts on an information sending interface, a "send" application may be directly triggered by using a menu; and after the user triggers the application, the terminal disables the selection mode and sends current information. The embodiment of the present invention does not set any limitation thereon.

According to the terminal multiselection operation method provided by the embodiment of the present invention, a selection mode of a touchscreen is activated according to an operation of a user, and under the selection mode, the user carries out a preset operation in batch on entries that need to be selected, thereby avoiding a one-by-one operation by the user on the displayed entries, implementing a free selection of and a batch operation on multiple entries of the displayed entries, and reducing operation time consumption of the user. Meanwhile, according to an optional solution provided by Embodiment 2 of the present invention, it may also be implemented that, when a sliding operation of a user reaches an edge of a selection region, under a condition that an already performed operation is stored, displayed content can be swiped over, thereby better facilitating a practical application.

### Embodiment 3

This embodiment of the present invention provides a terminal, and as shown in FIG. 5, the terminal includes a first operation receiving unit 51, a selection mode activating unit 52, and a second operation receiving unit 53.

The first operation receiving unit 51 is configured to, when content currently displayed by a touchscreen is displayed entries, receive a first operation of a user, where the displayed entries correspond to data items stored in a terminal. The displayed entries are data information displayed on a current interface and correspond to data items stored in a terminal, and the touchscreen refers to a screen on which an operation may be performed by using a finger, a touch pen or the like as a touch body. It should be noted that an operations by using a somatosensory gesture also falls within the scope defined by the embodiment of the present invention, which is not described in detail herein for the convenience of description and will be described in detail in the following.

The selection mode activating unit 52 is configured to, when the first operation is a first preset operation for activating a selection mode, activate the selection mode of the touchscreen.

The selection mode means that, in this mode, after the terminal receives an operation of a user on the touchscreen, the terminal performs a batch operation on displayed entries along a track of the operation without sliding content currently displayed by the touchscreen.

The first preset operation, that is, an operation for activating the selection mode, may be selected by using a function menu or activated by using a specific key, and the key may be a virtual key or a physical key. In a case of using a function menu, the touchscreen may be long-touched under a certain operation interface to activate the selection mode, or the function menu is opened by using a menu key to enter the selection mode. The embodiment of the present invention does not set any limitation thereon. In addition, when the selection mode is activated, the user may be prompted that the selection mode has been activated by using such manners as changing a font or a display ground color or using a floating font.

The second operation receiving unit 53 is configured to receive a second operation of the user and when a track of the second operation is a sliding track, carry out a second preset operation on entries along the track of the second operation. Optionally, the second operation may be a tap-selection operation and may also be a sliding operation, and for a sliding operation, the sliding track may be continuous or discontinuous, and may be a track of any shape. The second preset operation is a selection operation or a deselection operation carried out on the entries.

Optionally, the second operation receiving unit may include:
a selection subunit, configured to, when an entry along the track of the second operation is an unselected entry, carry out a selection operation on the entry; and
a deselection subunit, configured to, when an entry along the track of the second operation is a selected entry, carry out a deselection operation on the entry.In addition, optionally, when multiple entries along the track of the second operation include both selected entries and unselected entries, the second operation receiving unit may include:
   a first action subunit, configured to, when multiple entries along the track of the second operation include both selected entries and unselected entries, execute any one operation of a selection operation or a deselection operation uniformly on the multiple entries along the track of the second operation.

Alternatively, the second operation receiving unit may include:
a detecting subunit, configured to, when multiple entries along the track of the second operation include the selected entries and the unselected entries, detect a quantity of selected entries and a quantity of unselected entries in the multiple entries along the track of the second operation; and
a second action subunit, configured to, when the quantity of selected entries in the multiple entries along the track of the second operation is not less than the quantity of unselected entries, execute a deselection operation on the multiple entries along the track of the second operation; and/or a third action subunit, configured to, when the quantity of selected entries in the multiple entries along the track of the second operation is less than the quantity of unselected entries, execute a selection operation on the multiple entries along the track of the second operation.

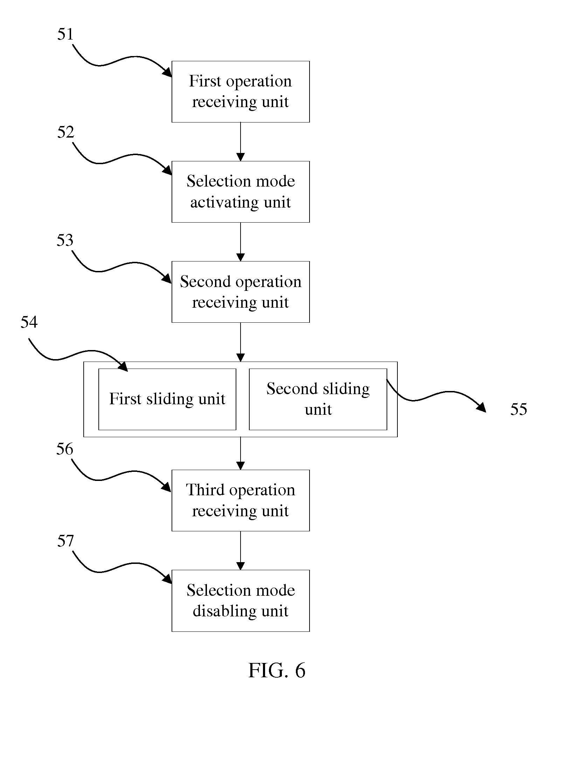

Optionally, as shown in FIG. 6, the terminal may further include at least one of a first sliding subunit and a second sliding subunit. where:
the first sliding unit 54 is configured to, when the track of the second operation of the user reaches an upper/lower edge of a current operation region, swipe the content currently displayed by the touchscreen up/down; and
the second sliding unit 55 is configured to, when the track of the second operation of the user reaches a left/right edge of a current operation, swipe the content currently displayed by the touchscreen left/right.

In a practical scenario, because of different models of terminals, their screen display may be in a left-right direction, or may also be in an up-down direction. With respect to different cases, when the track of the touch operation reaches an edge of the operation region, a page swiping operation needs to be carried out, and previously selected content or deselected content needs to be stored.

Furthermore, optionally, the terminal may further include:
a third operation receiving unit 56, configured to receive a third operation of the user; and
a selection mode disabling unit 57, configured to, when the third operation is a third preset operation for disabling the selection mode, disable the selection mode of the touchscreen.The third preset operation is preset and used to disable the selection mode. The third preset operation may be selected by using a function menu or activated by using a specific key, where the key may be a virtual key or a physical key. In a case of using a function menu, the touchscreen may be long-touched to disable the selection mode under a certain operation interface, or the function menu is opened by using a menu key to disable the selection mode. The embodiment of the present invention does not set any limitation thereon.

Optionally, the third preset operation may also be used to directly trigger an application when the selection mode is disabled. For example, after the user selects contacts on an information sending interface, a "send" application may be directly triggered by using a menu; and after the user triggers the application, the terminal disables the selection mode and sends current information. The embodiment of the present invention does not set any limitation thereon.

The terminal in the embodiment of the present invention may be an electronic device with a touchscreen, such as a mobile phone, an intelligent mobile terminal and a navigator.

According to the terminal provided by the embodiment of the present invention, a selection mode of a touchscreen is activated according to an operation of a user, and under the selection mode, the user carries out a preset operation in batch on entries that need to be selected, thereby avoiding a one-by-one operation by the user on the displayed entries, implementing a free selection of and a batch operation on multiple entries of the displayed entries, and reducing operation time consumption of the user. Meanwhile, according to an optional solution provided by Embodiment 2 of the present invention, it may also be implemented that, when a sliding operation of a user reaches an edge of a selection region, under a condition that an already performed operation is stored, displayed content can be swiped over, thereby better facilitating practical applications.

The embodiments of the present invention are described by using a contact list as an example, but a practical scenario is not limited thereto and there may also be other cases such as an audio list, a short message list and a picture list. In addition, the terminal in the embodiments of the present invention may be an electronic device with a touchscreen, such as a mobile phone, an intelligent mobile terminal and a navigator.

In addition, it should be noted that, as described in Embodiment 1 of the present invention, the technical solution described in the present invention may be applied not only to a touchscreen, but also to other fields, such as a somatosensory operation.

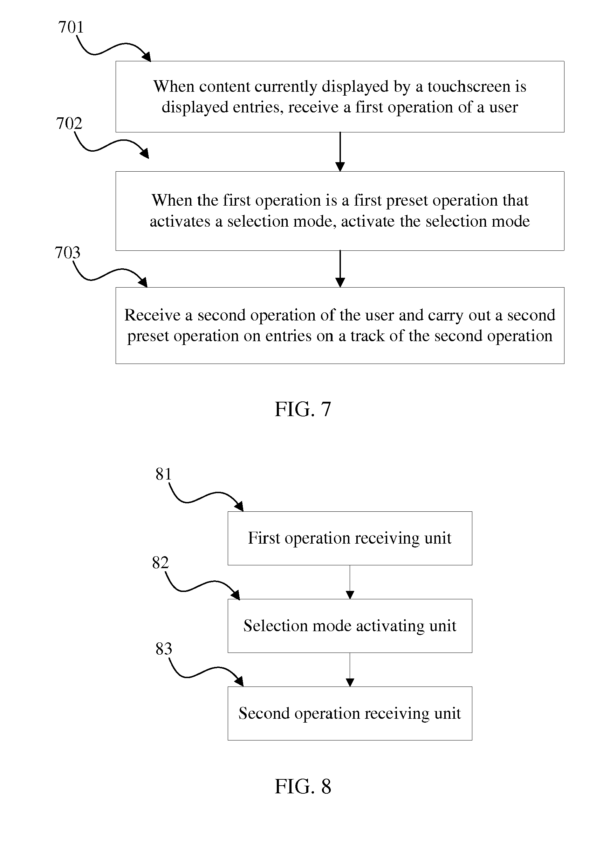

When the technical solution described in the embodiments of the present invention is applied to the field of somatosensory operations, as shown in FIG. 7, the method includes:
701: When content currently displayed by a screen is displayed entries, receive a first operation of a user, where the displayed entries correspond to data items stored in a terminal;
702: When the first operation is a first preset operation for activating a selection mode, activate the selection mode; and
703: Receive a second operation of the user and carry out a second preset operation on entries along a track of the second operation. The operation of the user may be collected by using a sensor, such as a gravity sensor, an acceleration sensor, a proximity sensor, a pressure sensor and a gyroscope; and the second preset operation may be a selection/deselection operation carried out on the displayed entries.

When the technical solution described in the embodiment of the present invention is applied to the field of somatosensory operations, as shown in FIG. 8, the apparatus includes:
a first operation receiving unit 81, configured to, when content displayed by a screen is displayed entries, receive a first operation of the user, wherein the displayed entries correspond to data items stored in a terminal;
a selection mode activating unit 82, configured to, when the first operation is a first preset operation, activate a selection mode, where the first operation is used to activate the selection mode; and
a second operation receiving unit 83, configured to receive a second operation of the user and carry out a second preset operation on entries along a track of the second operation.A person of ordinary skill in the art may understand that all or a part of the steps of the method embodiments may be implemented by hardware or hardware related to a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, an optical disc, or the like.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A terminal multiselection operation method, comprising:
receiving, when content currently displayed by a touchscreen is displayed entries, a first operation of a user, wherein the displayed entries correspond to data items stored in a terminal;activating, when the first operation is a first preset operation, a selection mode of the touchscreen; and receiving a second operation of the user and carrying out a second preset operation on all entries along a track of the second operation.

2. The method according to claim 1, wherein the carrying outa second preset operation on all entries along a track of the second operation comprises:
carrying out, when an entry along the track of the second operation is an unselected entry, a selection operation on the entry; and
carrying out, when an entry along the track of the second operation is a selected entry, a deselection operation on the entry.

3. The method according to claim 1, wherein the carrying out a second preset operation on all entries along a track of the second operation comprises:uniformly carrying out, when multiple entries along the track of the second operation include both selected entries and unselected entries, a selection operation or a deselection operation on the multiple entries along the track of the second operation.

4. The method according to claim 1, wherein the carrying out a second preset operation on all entries along a track of the second operation comprises:
detecting, when multiple entries along the track of the second operation include both selected entries and unselected entries, a quantity of selected entries and a quantity of unselected entries in the multiple entries along the track of the second operation;executing, when the quantity of selected entries in the multiple entries along the track of the second operation is not less than the quantity of unselected entries, a deselection operation on the multiple entries along the track of the second operation; and
executing, when the quantity of selected entries in the multiple entries along the track of the second operation is less than the quantity of unselected entries, a selection operation on the multiple entries along the track of the second operation.

5. The method according to any one of claims 1 to 4, wherein, after the carrying out a second preset operation on all entries along a track of the second operation, the method further comprises at least one of the following steps:
swiping, when the track of the second operation of the user reaches an upper/lower edge of a current operation region, content currently displayed by the touchscreen up/down; and swiping, when the track of the second operation of the user reaches a left/right edge of a current operation region, content currently displayed by the touchscreen left/right.

6. The method according to any one of claims 1 to 5, wherein, after the carrying out a second preset operation on all entries along a track of the second operation, the method further comprises
receiving a third operation of the user; and
disabling, when the third operation is a third preset operation, the selection mode of the touchscreen.

7. A terminal, comprising:
a first operation receiving unit, configured to, when content currently displayed by a touchscreen is displayed entries, receive a first operation of a user, wherein the displayed entries correspond to data items stored in a terminal;
a selection mode activating unit, configured to, when the first operation is a first preset operation, activate a selection mode of the touchscreen; and
a second operation receiving unit, configured to receive a second operation of the user and, when a track of the second operation is a sliding track, carry out a second preset operation on all entries along the track of the second operation.

8. The terminal according to claim 7, wherein the second operation receiving unit comprises:a selection subunit, configured to, when an entry along the track of the second operation is an unselected entry, carry out a selection operation on the entry; and
a deselection subunit, configured to, when an entry along the track of the second operation is an selected entry, carry out a deselection operation on the entry.

9. The terminal according to claim 7, wherein the second operation receiving unit comprises:
a first action subunit, configured to, when multiple entries along the track of the second operation include both selected entries and unselected entries, execute a selection operation or a deselection operation uniformly on the multiple entries along the track of the second operation.

10. The terminal according to claim 7, wherein the second operation receiving unit comprises:
a detecting subunit, configured to, when multiple entries along the track of the second operation include both selected entries and unselected entries, detect a quantity of selected entries and a quantity of unselected entries in the multiple entries along the track of the second operation; and
a second action subunit, configured to, when the quantity of selected entries in the multiple entries along the track of the second operation is not less than the quantity of unselected entries, execute a deselection operation on the multiple entries along the track of the second operation; anda third action subunit, configured to, when the quantity of selected entries in the multiple entries along the track of the second operation is less than the quantity of unselected entries, execute a selection operation on the multiple entries along the track of the second operation.

11. The terminal according to any one of claims 7 to 10, further comprising at least one of a first sliding subunit and a second sliding subunit, wherein:
the first sliding unit is configured to, when the track of the second operation of the user reaches an upper/lower edge of a current operation region, swipe the content currently displayed by the touchscreen up/down; and the second sliding unit is configured to, when the track of the second operation of the user reaches a left/right edge of the current operation region, swipe the content currently displayed by the touchscreen left/right.

12. The terminal according to any one of claims 7 to 11, further comprising:a third operation receiving unit, configured to receive a third operation of a user; and
a selection mode disabling unit, configured to, when the third operation is a third preset operation, disable the selection mode of the touchscreen.
